# EUROPÄISCHE PATENTSCHRIFT

(11) **EP 2 321 122 B1**
(45) Veröffentlichungstag und Bekanntmachung des Hinweises auf die Patenterteilung: **01.02.2017**
(21) Anmeldenummer: 09782036.9
(22) Anmeldetag: 20.08.2009
(51) Int. Cl.: B29D 99/00, B29K 105/08, B29L 31/30, B29L 31/60, B32B 3/02, B32B 3/04, B32B 3/14, B32B 5/12, B32B 5/18, B32B 5/26, B32B 7/04, B64C 1/18, B29C 70/08, B29C 70/86, B29D 24/00, B32B 38/04, B32B 3/08, B32B 3/12, B29C 73/06

(54) **SANDWICHPLATTE MIT INTEGRIERTER VERSTÄRKUNGSSTRUKTUR SOWIE VERFAHREN ZU DEREN HERSTELLUNG**
SANDWICH PLATE WITH INTEGRATED STIFFENING STRUCTURE AND METHOD FOR THE MANUFACTURE THEREOF
PANNEAU SANDWICH À STRUCTURE DE RENFORT INTÉGRÉE ET PROCÉDÉ DE FABRICATION ASSOCIÉ

(30) Priorität: 03.09.2008 DE 102008041788; 03.09.2008 US 190864 P
(43) Veröffentlichungstag der Anmeldung: 18.05.2011
(73) Patentinhaber: Airbus Operations GmbH, 21129 Hamburg (DE)
(72) Erfinder: JURGENS, Manuela, 22529 Hamburg (DE)
(74) Vertreter: Isarpatent
(86) Internationale Anmeldenummer: PCT/EP2009/060778
(87) Internationale Veröffentlichungsnummer: WO 2010/026054

(56) Entgegenhaltungen:
- EP-A- 0 263 094
- WO-A-01/81468
- WO-A-2005/023526
- WO-A-2007/012353
- DE-A1- 4 019 744
- DE-A1-102007 007 554
- US-A- 4 855 182
- US-A1- 2004 207 106

## Beschreibung

Die Erfindung betrifft eine Sandwichplatte mit einer Kernstruktur, insbesondere mit einer honigwabenförmigen Kernstruktur, und beidseitig auf diese aufgebrachten, planparallelen Deckschichten zur Bildung einer Fußbodenfläche in einer Rumpfzelle eines Flugzeugs. Die Rumpfzellen von Passagierflugzeugen sind üblicherweise mit mindestens einem Fußbodengerüst ausgestattet, das unter anderem zur Schaffung einer begehbaren Fußbodenfläche dient. Das Fußbodengerüst besteht aus einer Vielzahl von parallel hintereinander und dabei quer zur Flugrichtung angeordneten Querträgern, die mit Ringspanten der Rumpfzellenstruktur verbunden sind. In Längsrichtung der Rumpfzelle sind auf den Querträgern parallel zueinander beabstandet verlaufende Sitzschienenprofile angeordnet, die unter anderem zur Befestigung der Passagiersitze dienen und darüber hinaus die Steifigkeit des Fußbodengerüstes erhöhen. In der Regel ist zwischen den Sitzschienenprofilen eine Vielzahl von Fußbodenplatten, die in der Regel mit Sandwichplatten mit einer Stärke von etwa 1 cm gebildet sind, eingelegt. Die Fußbodenplatten verfügen über eine in der Regel honigwabenförmige Kernstruktur, die beidseitig mit Deckschichten belegt ist. Die Kernstruktur der Fußbodenplatten ist im Allgemeinen mit Nomex^{®}-Papier gebildet, während die Deckschichten mit einem faserarmierten Kunststoffmaterial wie zum Beispiel einem glasfaserverstärkten Phenolharz oder einem kohlefaserverstärkten Epoxidharz hergestellt sind.
Um den zunehmenden Komfortansprüchen der Passagiere gerecht zu werden, sind moderne Flugzeuge mit mehreren, in der Passagierkabine verteilt angeordneten Sanitär- und Nasszellen sowie Küchenblöcken, ausgestattet. In den Bereichen der Sanitär- und der Kücheneinrichtungen wirken hohe Lasten, die von den Fußbodenplatten bzw. dem darunter liegenden Fußbodengerüst aufgenommen und in die Rumpfzellenstruktur übergeleitet werden müssen. Die Anbindung der Küchen- bzw. Sanitärmodule an das Fußbodengerüst erfolgt üblicherweise mittels so genannter "Hardpoints", die eine punktuelle Lastüberleitung vom Modul in die darunter liegende Struktur und daneben einen Toleranzausgleich über die Anbindung erlauben.

Nach Maßgabe des Standes der Technik werden die Küchen-, Nass- und Sanitärmodule auf unterhalb der Bodenplatten verlaufenden Trägern befestigt, die zwischen zwei Querträgern in Längsrichtung des Flugzeugs verlaufen. In diese Träger können die "Hardpoints" der Module beispielsweise direkt eingeschraubt werden.
Eine Veränderung der räumlichen Lage der Module ist im Fall dieser Befestigungsart jedoch nur durch umfangreiche Modifikationen des Fußbodengerüstes möglich. Somit lassen sich kundenspezifische Änderungswünsche nur mit stark erhöhtem konstruktiven Aufwand realisieren, da das Fußbodengerüst an das geänderte Kabinenlayout angepasst werden muss.

Der Stand der Technik der DE 10 2007 007554 A1 beschreibt ein flächiges Verbundbauteil eines Fahrzeugs mit einer Sandwichanordnung, welche ein in die Kernschicht eingebettetes Verstärkungselement aufweist.

Die DE 40 19 744 A1 beschreibt ein Reparaturverfahren für Bauteile aus Kunststoff bzw. aus Faserverbundwerkstoff.

Die WO 01/81468 A beschreibt einen kohärenten Einsatz, welcher in den Kern einer Sandwichstruktur einbringbar ist.

Die EP 0 263 094 A beschreibt ein zum Reparieren von Leichtbaupaneelen bestimmtes Laminat.

Die WO 2007/012353 A beschreibt einen Armierungsprozess für Kernverbunde.

Die WO 2005/023526 beschreibt eine Krafteinleitungsstelle in Kernverbunden.

Aufgabe der Erfindung ist es daher, eine Sandwichplatte zu schaffen, auf der eine direkte Befestigung eines Sanitär-, Nass- und/oder Küchenmoduls möglich ist und deren geometrische Abmessungen, einschließlich der Bauhöhe, nicht von den bekannten Standardfußbodenplatten abweicht.

Diese Aufgabe wird durch eine Sandwichplatte mit den Merkmalen des Patentanspruchs 1 gelöst.

Dadurch, dass die Kernstruktur mindestens eine zumindest bereichsweise Aussparung aufweist, in die eine erfindungsgemäße Verstärkungsstruktur integriert ist,
können auf einer erfindungsgemäß ausgebildeten Sandwichplatte Küchen-, Nass- oder Sanitärmodule mit hohem Gewicht ohne weitere Unterstützungsmaßnahmen direkt befestigt werden. Das Einziehen von zusätzlichen Trägern in das Fußbodengerüst entfällt. Im Vergleich zu den standardmäßig eingesetzten Bodenplatten ist keine lokale Aufdickung bzw. Erhöhung (Wulst) vorhanden.
Somit kann das Layout der Passagierkabine des Flugzeugs, insbesondere die räumliche Positionierung der Sanitär- und Küchenmodule auf dem Fußbodengerüst leicht und schnell variiert werden. Umfangreiche konstruktive Anpassungen des Fußbodengerüstes an die veränderte Lage der Module sind nicht mehr erforderlich, da die erfindungsgemäße Sandwichplatte ortsvariabel und universell in allen Bereichen längs des Fußbodengerüstes verlegt werden kann. Die Sandwichplatte kann daher in Flugrichtung, das heißt parallel zur Längsachse (x-Achse) des Flugzeugs weitgehend frei positioniert werden.
Durch die mindestens eine, lokal in die Kernstruktur integrierte Verstärkungsstruktur wird die Kernstruktur der Sandwichplatte insbesondere dahingehend verstärkt, dass senkrecht und parallel zur Plattenoberseite wirkende Kräfte aufgenommen werden können.

Eine Weiterbildung der Sandwichplatte sieht vor, dass die mindestens eine Verstärkungsstruktur mit mindestens einem Kern gebildet ist.
In bekannten Sandwichplatten hat die Kernstruktur primär die Aufgabe, die Deckschichten auf einem festen Abstand zueinander zu halten, während die eigentliche Lastübertragung durch die Deckschichten erfolgt. Durch die Integration der Verstärkungsstruktur unmittelbar in die Kernstruktur kann die erfindungsgemäße Sandwichplatte auch Druckkräfte, die senkrecht zur Plattenfläche wirken, direkt aufnehmen.

Eine Weiterentwicklung der Sandwichplatte sieht vor, dass der Kern zumindest bereichsweise mit mindestens einem Band versehen ist, das mit einem Prepreg-Material aufgebaut ist, dessen Verstärkungsfasern jeweils eine einheitliche Verlaufsrichtung von insbesondere ± 45° aufweisen.
Hierdurch wird die mechanische Festigkeit des Kerns, insbesondere dessen Fähigkeit zur Übertragung von Scherkräften, verbessert.
Bei den eingesetzten Prepreg-Materialien handelt es sich bevorzugt um schmale Bänder, die eine Verstärkungsfaseranordnung mit einer jeweils einheitlichen Faserverlaufsrichtung aufweisen. Der Kern wird mit einer Vielzahl dieser Prepreg-Bänder umwickelt, die abwechselnde Faserorientierungen von + 45° und - 45° haben, um eine hohe Belastbarkeit vornehmlich in der Schubrichtung zu erzielen. Das Prepreg-Material besteht aus Verstärkungsfasern, die mit einem aushärtbaren Kunststoffmaterial, wie zum Beispiel einem Epoxidharz, einem Polyesterharz oder einem Phenolharz vorimprägniert sind. Als Verstärkungsfasern kommen insbesondere Kohlefasern, Glasfasern, Aramid^{®}-Fasern in Betracht. Das Prepreg-Material wird im Allgemeinen auf großen Rollen bereit gehalten und kann von diesen leicht abgezogen werden, so dass sich die Umwicklung der Kerne automatisieren und in bereits vorhandene kontinuierliche Fertigungsverfahren für Sandwichplatten integrieren lässt.

Eine weitere Fortbildung der Erfindung sieht vor, dass mindestens eine Verstärkungsstruktur zumindest bereichsweise mit mindestens einem flächenhaften Zuschnitt versehen ist, wobei der mindestens eine Zuschnitt mit einem Prepreg-Material gebildet ist, dessen Verstärkungsfasern eine Verlaufsrichtung von 0° und/oder 90° aufweisen.
Infolge dieser Ausgestaltung ist der umwickelte Kern auch mit Zugkräften belastbar. Grundsätzlich kann der Kern entsprechend den Anforderungen der für die Sandwichplatte (Bodenplatte) vorgesehenen, erhöhten Lastfälle mit einer beliebigen Abfolge von Prepreg-Materialien mit Verlaufsrichtungen von jeweils ± 45, 0° und 90° umwickelt werden, solange eine Geometrie des Kern das faltenfreie Drapieren und eine lückenlose Ablage der vorimprägnierten Verstärkungsfaserlagen erlaubt. Die Zuschnitte aus dem Prepreg-Material mit einer Faserorientierung von 0° oder 90° können aufgrund der größeren Breite im Allgemeinen nur in der Richtung einer Längs- und Querachse des Kerns auf diesen abgelegt werden, um einen durch Verzug bedingten Faltenwurf zu vermeiden. Alternativ können die Zuschnitte zumindest bereichsweise auf eine Oberseite und/oder eine Unterseite des Kerns unter Freilassung der umlaufenden Kanten aufgelegt werden.

Nach Maßgabe einer weiteren Ausgestaltung ist vorgesehen, dass die mindestens eine Verstärkungsstruktur zumindest bereichsweise formschlüssig in die Aussparung innerhalb der Kernstruktur einlegbar ist und mit der Aussparung einen Stoffschluss bildet. Hierdurch wird eine effektive Kraftüberleitung zwischen der Verstärkungsstruktur und der umgebenden Sandwichplatte erzielt. Dadurch, dass der Kern mit einem noch nicht ausgehärteten Prepreg-Material umwickelt ist, muss dieser nicht zwingend in die Aussparung eingeklebt werden. Alternativ kann die Verstärkungsstruktur jedoch zusätzlich mit der Kernstruktur durch ein geeignetes Klebemittel verklebt werden. Zur weiteren Erhöhung der Festigkeit kann eine mit einem aushärtbaren Kunststoffmaterial gebildete Füllmasse in einen Randbereich der Kernstruktur, das heißt in die geschlossenzelligen Honigwaben, eingegeben werden, die die Verstärkungsstruktur umgibt. Eine Höhe der Verstärkungsstruktur entspricht möglichst genau einer Höhe der Kernstruktur der übrigen Sandwichplatte, so dass die Verstärkungsstruktur im Idealfall nahezu im vollständigen Form- und Stoffschluss in die umgebende Kernstruktur der Sandwichplatte eingebettet ist und Aufdickungen (Erhöhung durch Wulstbildung) vermieden werden.

Gemäß einer weiteren vorteilhaften Ausgestaltung der Sandwichplatte ist der mindestens eine Kern mit einer Kernstruktur, insbesondere mit einer honigwabenförmigen Kernstruktur, und/oder mit einem Hartschaum gebildet.
Die Verwendung einer honigwabenförmigen Kernstruktur, die auch für die übrige Sandwichplatte eingesetzt wird, ermöglicht einen vereinfachten Herstellungsprozess, da weniger Ausgangsmaterialien bereitgehalten werden müssen. In besonders vorteilhafter Weise kann der Kern mit dem aus der Kernstruktur herausgeschnittenen Abschnitt gebildet sein, wobei jedoch dessen Außenabmessungen um einen Betrag, der einer Materialstärke der später abzulegenden Verstärkungslagen entspricht, zu reduzieren sind. Die Oberflächengeometrie des Kerns entspricht hierbei in etwa einer Oberflächengeometrie der Aussparung innerhalb der Kernstruktur der Sandwichplatte.

Eine weitere vorteilhafte Weiterbildung der Sandwichplatte sieht vor, dass die Verstärkungsstruktur durch eine Kombination aus mindestens zwei Verstärkungsstrukturen gebildet ist.
Infolge dieser Ausgestaltung können Verstärkungsstrukturen mit einer komplexen Oberflächengeometrie durch das Kombinieren von mindestens zwei Verstärkungsstrukturen mit einer einfacheren Grundgeometrie gebildet werden. Die Kerne dieser Verstärkungsstrukturen mit einfacherer Geometrie können für sich getrennt mit den erforderlichen Verstärkungslagen in kraftflussoptimierter Verlaufsrichtung belegt bzw. bewickelt werden. Darüber hinaus erleichtert das Aufteilen einer komplexen Verstärkungsstruktur in mehrere Verstärkungsstrukturen mit einer einfacheren Geometrie das faltenfreie Drapieren der Prepreg-Bänder auf dem Kern.
Durch die Kombination beispielsweise eines quaderförmigen Kerns mit einem Kern, der eine quaderförmige Gestalt, mit jedoch geneigten bzw. abgeschrägten, trapezförmigen Seitenflächen aufweist (so genannter "Obelisk"), kann in besonders vorteilhafter Weise eine Verstärkungsstruktur aufgebaut werden, bei der die Entstehung von Kerbspannungen in der späteren Sandwichplatte weitestgehend vermieden wird. Im Allgemeinen wird die Aussparung eine rechteckförmige Geometrie aufweisen.

Gemäß einer weiteren vorteilhaften Ausgestaltung ist vorgesehen, dass die mindestens eine Verstärkungsstruktur mit mindestens einem Stopfen, insbesondere zylindrischen Stopfen versehen ist.
Hierdurch wird innerhalb der Verstärkungsstruktur ein Integrationsbereich für einen "Hardpoint", beispielsweise ein Insert, eine zweiseitige Schraub-Klemmhülse oder dergleichen geschaffen, wodurch die mechanische Anbindung eines Bauteils, wie zum Beispiel eines Küchenmoduls, direkt auf der Sandwichplatte ermöglicht wird. Die Stopfen sind in der Regel vorgefertigt. Bei zylindrischen Stopfen sind diese mit einer Vielzahl von übereinander angeordneten kreisförmigen Abschnitten aus einem zum Verarbeitungszeitpunkt nicht vollständig ausgehärteten faserarmierten Prepreg-Material gebildet. Nach dem Einbetten bzw. Verkleben der Verstärkungsstruktur in die anfänglich zumindest noch oben offene Kernstruktur und dem Aufbringen der oberen Deckschicht wird die gesamte Anordnung einschließlich der Stopfen zeitgleich durch die Anwendung von Druck und/oder Temperatur ausgehärtet. Die zylindrischen Stopfen weisen Durchmesser zwischen 10 mm und 200 mm auf, so dass in der Verstärkungsstruktur entsprechende Ausnehmungen bzw. Bohrungen vorzusehen sind. Die Stopfen werden anschließend mit den Prepreg-Bändern mit den ± 45°-Verstärkungsfaserlagen und den bahnförmigen, in der Regel rechteckförmigen Zuschnitten mit den 0°- bzw. den 90°-Lagen bedeckt.

Ferner wird die erfindungsgemäße Aufgabe durch ein Verfahren nach Maßgabe des Patentanspruchs 11 zur Herstellung einer Sandwichplatte mit einer Kernstruktur, insbesondere mit einer honigwabenförmigen Kernstruktur, die beidseitig mit planparallelen Deckschichten versehen ist, insbesondere einer Sandwichplatte nach Maßgabe der Patentansprüche 1 bis 10, mit den folgenden Verfahrensschritten gelöst:
a) Einbringen mindestens einer Aussparung in die Kernstruktur,
b) Aufbringen von Bändern, die mit einem faserverstärkten Prepreg-Material gebildet sind, auf mindestens einen Kern zur Bildung mindestens einer Verstärkungsstruktur, die zumindest bereichsweise formschlüssig unter Schaffung eines Stoffschlusses in die mindestens eine Aussparung einbringbar ist,
c) beidseitiges Aufbringen der Deckschichten auf die Kernstruktur, und
d) Aushärten der mindestens einen Verstärkungsstruktur sowie der Deckschichten unter Anwendung von Druck und/oder Temperatur.

Dadurch, dass die mindestens eine Verstärkungsstruktur bereits vor dem beidseitigen Aufbringen der Deckschichten, also in die noch offene Sandwichplatte, in eine in die Kernstruktur vorab eingebrachte Aussparung eingebracht wird, ist es möglich, die mindestens eine Verstärkungsstruktur in die Sandwichplatte zu integrieren. Die Verstärkungsstruktur kann erforderlichenfalls in die Einsparung eingeklebt werden. Aufgrund der bündigen Einbettung ist eine Veränderung der Standardbauhöhe der Sandwichplatte bzw. eine lokale Aufdickung derselben zur Erhöhung der Lasttragfähigkeit nicht mehr notwendig.
Nach Maßgabe des Verfahrens wird im Verfahrensschritt a) zunächst eine Aussparung in die Kernstruktur eingelassen, deren Tiefe sich über eine gesamte Höhe der Kernstruktur erstreckt, um einen bündigen Abschluss der Verstärkungsstruktur zu erreichen. Die Aussparung kann eine nahezu beliebige geometrische Form haben, wird jedoch in der Regel die Form eines Quaders mit senkrechten und/oder mindestens zwei gegenüberliegenden, abgeschrägten bzw. geneigten Kanten aufweisen. Im anschließenden Verfahrensschritt b) wird auf den Kern eine Vielzahl von Verstärkungslagen aus einem bandförmigen Prepreg-Material abgelegt. Hierbei werden bevorzugt mindestens zwei verschiedene Prepreg-Bänder mit einer jeweils unterschiedlichen Faserorientierung von + 45° oder - 45° abwechselnd auf den Kern gewickelt.
Der (Stütz-)Kern selbst ist beispielsweise mit einem Hartschaummaterial gebildet. Alternativ kann der Kern auch mit dem demselben Material hergestellt werden, das zur Bildung der Kernstruktur der Sandwichplatte Verwendung selbst findet, also beispielsweise mit einem honigwabenförmig ausgestalteten Nomex^{®}-Papier. Zusätzlich kann eine Oberseite und/oder eine Unterseite des Kerns mit weiteren Verstärkungsfaserlagen belegt werden, in denen die Verstärkungsfasern vorzugsweise eine Verlaufsrichtung von 0° oder 90° aufweisen. Die Winkelangaben hinsichtlich der Verlaufsrichtungen der Verstärkungsfasern in den Prepreg-Bändern beziehen sich jeweils auf einen Winkel, der zwischen einer Längsachse des Prepreg-Bandes bzw. dessen parallelen Außenkanten und der jeweils betrachteten Längsachse der Verstärkungsfaser besteht. Hiervon ist der Verlege- bzw. der Ablagewinkel, unter dem die Prepreg-Bänder auf dem Kern abgelegt werden, zu unterscheiden. Dieser Winkel, der zwischen der Längsachse des Bandes und einer Bauteilkante ermittelt wird, ist nicht konstant und kann je nach Ablageort variieren.
Im Anschluss daran wird der so vorbereitete Kern in die Aussparung der Kernstruktur der Sandwichplatte eingebettet, um eine form- und stoffschlüssige Integration der Verstärkungsstruktur zu erreichen.
Die an den Kern angrenzenden Bereiche der umgebenden Kernstruktur der Sandwichplatte können mit einer aushärtbaren Füllmasse zur besseren Überleitung der Kräfte von der Verstärkungsstruktur in die Kernstruktur versehen werden. Die Füllmasse ist vorzugsweise mit einem aushärtbaren Kunststoffmaterial, beispielsweise mit einem gegebenenfalls faserverstärkten oder auf andere Weise stabilisierten Epoxidharz, Polyesterharz oder Phenolharz gebildet. Im Verfahrensschritt c) werden beidseitig die Deckschichten auf die Kernstruktur aufgebracht. Die Deckschichten werden in der Regel mit der Kernstruktur durch ein geeignetes Klebemittel angebunden. Im abschließenden Verfahrensschritt d) erfolgt die Aushärtung der Gesamtanordnung. Bis zum Abschluss des Verfahrensschrittes d) befinden sich die Verstärkungsstruktur, die beiden Deckschichten sowie die optionale Füllmasse im nicht ausgehärteten, dass heißt noch duktilen Zustand.

Weitere vorteilhafte Ausgestaltungen Verfahrens sind in weiteren Patentansprüchen dargelegt.

In der Zeichnung zeigt:
- **Fig. 1**: Eine Draufsicht auf eine erste, quaderförmige Verstärkungsstruktur mit einem Kern, auf den teilweise Verstärkungsfaserlagen aufgebracht sind,
- **Fig. 2**: eine Seitenansicht der Verstärkungsstruktur nach Fig. 1 mit einer darunter vertikal versetzt angeordneten zweiten Verstärkungsstruktur mit einer angenähert trapezförmigen Querschnittsgeometrie,
- **Fig. 3**: eine Draufsicht auf einen Teilabschnitt einer oben noch offenen Sandwichplatte mit der eingebetteten Verstärkungsstruktur nach Maßgabe der Fig. 2, und
- **Fig. 4**: eine Querschnittsdarstellung durch einen zylindrischen Stopfen mit einem darin aufnehmbaren Befestigungselement (Hardpoint).

In der Zeichnung weisen dieselben konstruktiven Elemente jeweils die gleiche Bezugsziffer auf.

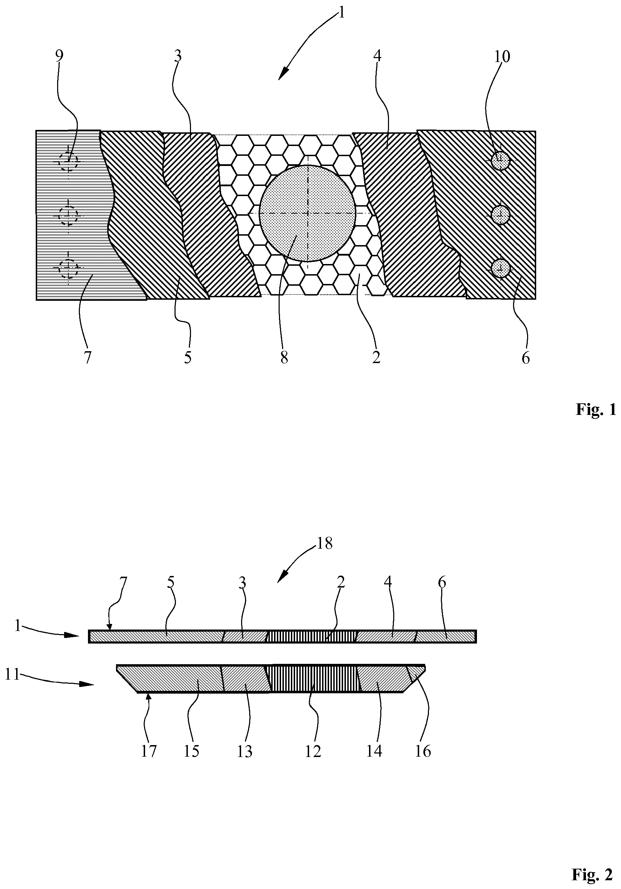

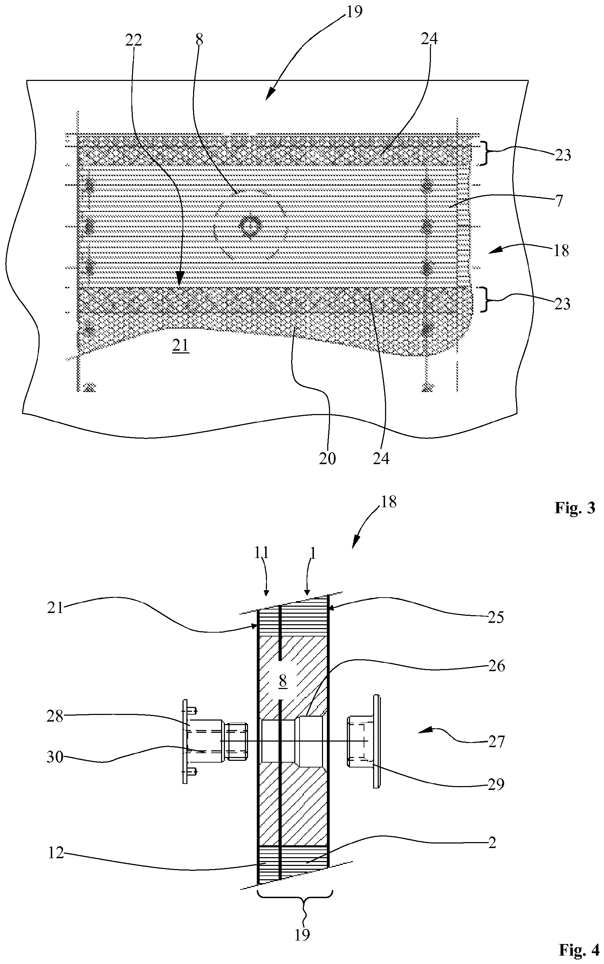

Die **Fig. 1** zeigt eine Draufsicht auf eine erste Verstärkungsstruktur, die zur Einbettung in eine Kernstruktur der erfindungsgemäßen Sandwichplatte vorgesehen ist.
Eine erste quaderförmige Verstärkungsstruktur 1 umfasst unter anderen einen mit einer Vielzahl von honigwabenförmigen Zellen gebildeten Kern 2 (so genannter "Honeycomb"), der mit einer Vielzahl von Bändern 3 bis 6 umwickelt ist. Der Kern 2 weist eine quaderförmige Form auf, wobei die Seitenflächen allseitig nach innen geneigt (abgeschrägt unter einem Winkel von 45°) ausgestaltet sind. Die Bänder 3 bis 6 sind mit einem aushärtbaren, faserverstärkten Prepreg-Material gebildet, deren Verstärkungsfasern unterschiedliche Verlaufsrichtungen aufweisen. Die Bänder 3 und 4 sind mit Verstärkungsfasern gebildet, die eine - 45°-Verlaufsrichtung aufweisen, während die darüber gewickelten Bänder 5,6 eine Faserverlaufsrichtung von + 45° aufweisen. Die Bänder 3 bis 6 sind mit einem bahnförmigen Zuschnitt 7 belegt bzw. umwickelt, der gleichfalls mit einem Prepreg-Material gebildet ist. Im Gegensatz zu den Bändern 3 bis 6 weisen die Verstärkungsfasern im Zuschnitt 7 eine Verlaufsrichtung von 0° und/oder 90° auf.
Darüber hinaus ist in den Kern 2 in einem mittleren Bereich ein zylindrischer Stopfen 8 mit einem Durchmesser von 90 mm eingesetzt. Der zylindrische Stopfen 8 ist mit einer Vielzahl von übereinandergeschichteten kreisförmigen Ausschnitten aus einem faserverstärkten Prepreg-Material gebildet. Eine Höhe des Stopfens 8 entspricht in etwa einer Höhe des Kerns 2, um eine Wulstbildung (das heißt Aufdickung) der Sandwichplatte zu vermeiden. In den seitlichen Randabschnitten der Verstärkungsstruktur 1 sind jeweils drei gleichfalls zylindrische Stopfen mit einem kleineren Durchmesser von etwa 19 mm, jedoch mit derselben Höhe des Stopfens 8, eingesetzt, von denen lediglich die beiden oberen, gegenüberliegenden Stopfen 9,10 mit einer Bezugsziffer versehen sind. Der Stopfen 8 dient zur späteren Integration eines Befestigungselementes (vgl. insb. Fig. 4), insbesondere eines Hardpoints, eines Inserts, einer Schraub-Klemmhülse oder dergleichen, wodurch zum Beispiel eine schraubweise Anbindung eines Bauteils an die erfindungsgemäße Sandwichplatte unter gleichzeitiger Schaffung eines Toleranzausgleichs ermöglicht wird.

Die **Fig. 2** zeigt eine Seitenansicht auf die quaderförmige Verstärkungsstruktur 1 nach Fig. 1 mit einer darunter senkrecht versetzt dargestellten, zweiten Verstärkungsstruktur mit trapezförmiger Querschnittsgeometrie.
Hierdurch wird eine komplexere Geometrie der (Gesamt-)Verstärkungsstruktur erreicht, auf der dennoch die abzulegenden Verstärkungsfaserlagen aus dem Prepreg-Material im Idealfall faltenfrei drapierbar sind.
Die Bänder 3 bis 6 sind um die äußeren Kanten des Kerns 2 herumgeführt und umschließen diesen allseitig. Dasselbe gilt für die Zuschnitte 7.
Die zweite Verstärkungsstruktur 11 ist mit einem quaderförmigen Kern 12 gebildet. Entsprechend der ersten Verstärkungsstruktur 1 ist auch der Kern 12 mit einer Vielzahl von Bändern 13 bis 16 sowie Zuschnitten 17 aus einem Prepreg-Material mit Faserorientierungen von ± 45° und 0° und/oder 90° allseitig belegt bzw. bewickelt. Der Stopfen 8 durchsetzt die beiden Verstärkungsstrukturen, die lediglich der besseren zeichnerischen Darstellung halber vertikal versetzt zueinander dargestellt sind.
Beide Verstärkungsstrukturen 1,11 werden zu einer Verstärkungsstruktur 18 kombiniert und in eine korrespondierend ausgestaltete Aussparung (vgl. Fig. 3) in eine Kernstruktur einer herzustellenden Sandwichplatte integriert.
In der Regel wird die Verstärkungsstruktur 11 - wie in der Fig. 2 gezeigt - unterhalb der Verstärkungsstruktur 1 in der Aussparung der Kernstruktur der Sandwichplatte platziert, so dass die quaderförmige, erste Verstärkungsstruktur 1 einseitig an der oberen Deckschicht der Sandwichplatte anliegt, während die zweite Verstärkungsstruktur 11 mit der trapezförmigen Querschnittsgeometrie mit der kürzeren Unterseite an der unteren Deckschicht und mit der längeren Oberseite an der quaderförmigen Verstärkungsstruktur 1 anliegt.

Die beiden Verstärkungsstrukturen 1,11 bilden eine (Gesamt-)Verstärkungsstruktur 18, wobei durch die zweite, trapezförmig ausgebildete Verstärkungsstruktur 11 Kerbspannungen in der späteren Sandwichplatte minimiert werden. Zudem lassen sich die Prepreg-Materialien leichter um die getrennten Verstärkungsstrukturen herum drapieren bzw. ablegen.

Die **Fig. 3** zeigt eine Draufsicht auf einen Ausschnitt einer oben noch offenen Sandwichplatte mit eingebetteter Verstärkungsstruktur.
Eine Sandwichplatte 19 mit einer Kernstruktur 20 ist unterseitig bereits mit einer Deckschicht 21 versehen, nach obenhin noch nicht mit einer oberen Deckschicht verschlossen. In eine Aussparung 22 ist die durch Kombination der ersten und zweiten Verstärkungsstruktur 1,11 gebildete komplexe Verstärkungsstruktur 18 eingelegt. Da beide Verstärkungsstrukturen 1,11 mit adhäsiv wirkenden, anfänglich noch nicht ausgehärteten Prepreg-Materialien umwickelt sind, erübrigt sich in der Regel eine zusätzliche Verklebung. Die Aussparung 22 ist passgenau zur Oberflächengeometrie der Verstärkungsstruktur 18 ausgebildet, um eine form- und stoffschlüssige (adhäsive) Integration frei von etwaigen Zwischenräumen oder Kavitäten, die die mechanische Belastbarkeit der fertigen Sandwichplatte reduzieren würden, zu erreichen. Von großer Bedeutung ist hierbei, dass eine Höhe der zu integrierenden Verstärkungsstruktur 18 möglichst exakt einer Höhe der eingesetzten Kernstruktur 20 entspricht, um unerwünschte Aufdickungen bzw. lokale Erhöhungen der Sandwichplatte 19 zu vermeiden. Im Ergebnis besteht zwischen der Verstärkungsstruktur 18 und dem diese randseitig umgebenden Kern 2 eine "formschlüssige" Verklebung.
In der Darstellung der Fig. 3 ist ferner der oben liegende Zuschnitt 7 sichtbar, der mit einem bahnförmigen Prepreg-Material gebildet ist, das mit Verstärkungsfasern mit einer 0°- und/oder 90°- Faserorientierung aufgebaut ist. In einem Bereich 23, in dem die Kernstruktur 20 an die Verstärkungsstruktur 18 angrenzt, ist in die Kernstruktur 20 bzw. in deren Honigwaben eine geeignete Füllmasse 24 zumindest bereichsweise eingebracht. Die Füllmasse ist bevorzugt mit einem aushärtbaren Kunststoffmaterial gebildet, das gegebenenfalls mit einer Armierung zur mechanischen Verstärkung versehen ist. Darüber hinaus ist der Stopfen 8 mit einer gestrichelten Linie angedeutet, da dieser vollständig vom Zuschnitt 7 bedeckt ist.

Die **Fig. 4** illustriert eine Querschnittsdarstellung durch die Sandwichplatte mit beidseitig aufgebrachten Deckschichten im Bereich des großflächigen, mittleren Stopfens (vgl. Fig. 3).
Die Sandwichplatte 19 ist mit den Deckschichten 21,25 versehen. Zwischen den Deckschichten 21,25 befindet sich die Verstärkungsstruktur 18 mit dem darin eingesetzten Stopfen 8. In den Stopfen 8 ist eine Stufenbohrung 26 eingebracht, die zur Integration bzw. Befestigung eines Befestigungsmittels 27 dient. Das Befestigungsmittel 27 umfasst zwei Hülsen 28,29, die miteinander zu verbinden sind. Die Verbindung zwischen den Hülsen 28,29 kann beispielsweise durch eine kombinierte Schraub-Klemmverbindung erfolgen. Die linksseitige Hülse 28 verfügt über eine Gewindebohrung 30, in die ein nicht dargestellter Schraubbolzen zur Anbindung eines weiteren Bauteils, zum Beispiel ein Küchenmodul, einschraubbar ist.
Infolge der erfindungsgemäß in die Kernstruktur 20 integrierten Verstärkungsstruktur 18 verfügt die Sandwichplatte 19 über eine hohe Lasttragfähigkeit bei im Vergleich zu den Standardmaßen der üblicherweise als Bodenplatten verwendeten Sandwichplatten unveränderten äußeren geometrischen Abmessungen.

Zur Durchführung des erfindungsgemäßen Verfahrens wird in einem ersten Verfahrensschritt a) zumindest eine Aussparung 22 in die Kernstruktur 20 der zu bildenden Sandwichplatte 19 eingebracht. Das Herausarbeiten der Aussparung 22 sollte mit möglichst hoher Präzision erfolgen, um eine im Idealfall form- und stoffschlüssige Integration der mindestens einen Verstärkungsstruktur 1,11,18 zu gewährleisten. Das Herausarbeiten der Aussparung 22 kann beispielsweise mit einer CNC-gesteuerten Fräsmaschine erfolgen. Grundsätzlich ist es möglich, den herausgearbeiteten Ausschnitt zur Bildung der Aussparung 22 als Kern für die spätere Verstärkungsstruktur 1, 11,18 zu verwenden.
Sodann können in die vorbereiteten Kerne 2,12 Aussparungen bzw. Bohrungen zur Aufnahme von Stopfen eingebracht werden. Die Stopfen sind mit einer Vielzahl von übereinander geschichteten Ausschnitten aus einem anfänglich noch weichen Prepreg-Material gebildet und weisen beispielsweise eine zylindrische Form mit einem Durchmesser zwischen 10 mm und 200 mm auf.
In einem weiteren Verfahrensschritt b) wird eine Vielzahl von Bändern 3 bis 6, 13 bis 16, die jeweils mit einem faserverstärkten Prepreg-Material gebildet sind, auf einen Kern 2,12 aufgewickelt. Diese Kerne 2,12 können beispielsweise mit einem Hartschaum oder einem Kernstrukturmaterial gebildet sein, das dem für die Schaffung der Kernstruktur 20 der Sandwichplatte 19 verwendeten entspricht. Beim Ablageprozess werden abwechselnd Bänder mit einer + 45°-Faserorientierung und mit einer - 45°-Faserorientierung mit mehreren Umläufen um den Kern 2,12 abgelegt. Abschließend werden auf den Kern 2,12 Zuschnitte 7 mit einem Prepreg-Material mit einer 0°- und/oder 90°- Faserorientierung abgelegt. Im Idealfall wird der Kern 2,12 vollständig vom Prepreg-Material umschlossen. Im Anschluss daran wird die vorbereitete Verstärkungsstruktur 1,11,18 in die Aussparung 22 eingelegt. Optional können an die Verstärkungsstruktur 1,11,18 anschließende Bereiche der Kernstruktur 20, das heißt die zugehörigen Honigwaben, mit einer Füllmasse aus einem aushärtbaren Kunststoffmaterial zur besseren Anbindung aufgefüllt werden. Beispielsweise wird ein die eingebettete Verstärkungsstruktur 1,11,18 umschließender Streifen der Kernstruktur 20 mit einer Breite von bis zu 2,0 cm möglichst vollständig mit einer aushärtbaren Füllmasse aufgefüllt. Fakultativ kann die Verstärkungsstruktur 1, 11,18 auch eingeklebt werden.
Im nachfolgenden Verfahrensschritt c) werden die Deckschichten 21,25 beidseitig auf die Kernstruktur 20 aufgebracht. Im abschließenden Verfahrensschritt d) erfolgt die Aushärtung des Gesamtaufbaus unter Anwendung von Druck und/oder Temperaturen in geeigneten Vorrichtungen, wie beispielsweise einem Ofen oder einem Autoklaven. Grundsätzlich ist es möglich, die Kernstruktur 20 bereits vor dem Einbringen der Aussparung 22 einseitig mit einer Deckschicht 21,25 zu versehen.
Nach dem Aushärtungsvorgang im Verfahrensschritt d) werden Bohrungen oder Stufenbohrungen in die Stopfen zur Aufnahme von Befestigungselementen zur Anbindung weiterer Bauteile an die Sandwichplatte eingebracht. Als Befestigungselemente kommen zum Beispiel Inserts oder Klemm-Schraubhülsen in Betracht, die in den Bohrungen in ausgehärteten Stopfen befestigbar sind.

### Bezugszeichenliste

- 1: (erste) Verstärkungsstruktur
- 2: Kern (Honigwabenzellen)
- 3: Band (Prepreg-Material, -45°-Faserorientierung)
- 4: Band (Prepreg-Material -45°-Faserorientierung)
- 5: Band (Prepreg-Material +45°-Faserorientierung)
- 6: Band (Prepreg-Material +45°-Faserorientierung)
- 7: Zuschnitt (Prepreg-Material 0°/90°-Faserorientierung)
- 8: Stopfen (groß)
- 9: Stopfen (klein)
- 10: Stopfen (klein)
- 11: (zweite) Verstärkungsstruktur
- 12: Kern (Honigwabenzellen)
- 13: Band (Prepreg-Material, -45°-Faserorientierung)
- 14: Band (Prepreg-Material -45°-Faserorientierung)
- 15: Band (Prepreg-Material +45°-Faserorientierung)
- 16: Band (Prepreg-Material +45°-Faserorientierung)
- 17: Zuschnitt (Prepreg-Material 0°/90°-Faserorientierung)
- 18: Verstärkungsstruktur (kombiniert)
- 19: Sandwichplatte (Bodenplatte)
- 20: Kernstruktur
- 21: (erste) Deckschicht
- 22: Aussparung
- 23: Bereich
- 24: Füllmasse
- 25: (zweite) Deckschicht
- 26: Stufenbohrung
- 27: Befestigungsmittel
- 28: Hülse
- 29: Hülse
- 30: Gewindebohrung

## Patentansprüche

1. Sandwichplatte (19) mit einer Kernstruktur, insbesondere mit einer honigwabenförmigen Kernstruktur (20), und beidseitig auf diese aufgebrachten, planparallelen Deckschichten (21,25) zur Bildung einer Fußbodenfläche in einer Rumpfzelle eines Flugzeugs, wobei die Kernstruktur mindestens eine Aussparung (22) aufweist, in die mindestens eine Verstärkungsstruktur (1,11,18) integriert ist,
**dadurch gekennzeichnet, dass**
die mindestens eine Verstärkungsstruktur (1,11,18) mit mindestens einem Kern (2,12) gebildet ist, wobei der Kern (2,12) mindestens eine Ausnehmung aufweist, in welche ein Stopfen (8-10) eingebracht ist, in den mindestens ein Befestigungselement (27) zur Anbindung mindestens eines weiteren Bauteils an die Sandwichplatte einbringbar ist, und wobei der Kern (2,12) mit einer Vielzahl von Prepreg-Bändern (3-6) umwickelt ist, welche eine jeweils einheitliche Faserverlaufsrichtung aufweisen.

2. Sandwichplatte (19) nach Patentanspruch 1, **dadurch gekennzeichnet, dass** die einheitliche Verlaufsrichtung ± 45° beträgt.

3. Sandwichplatte (19) nach einem der Patentansprüche 1 oder 2, **dadurch gekennzeichnet, dass** mindestens eine Verstärkungsstruktur (1,11,18) zumindest bereichsweise mit mindestens einem flächenhaften Zuschnitt (7,17) versehen ist, wobei der mindestens eine Zuschnitt (7,17) mit einem Prepreg-Material gebildet ist, dessen Verstärkungsfasern eine Verlaufsrichtung von 0° und/oder 90° aufweisen.

4. Sandwichplatte (19) nach einem der Patentansprüche 1 bis 3, **dadurch gekennzeichnet, dass** die mindestens eine Verstärkungsstruktur (1,11,18) zumindest bereichsweise formschlüssig in die Aussparung (22) innerhalb der Kernstruktur (20) einlegbar ist und mit der Aussparung (22) einen Stoffschluss bildet.

5. Sandwichplatte (19) nach einem der Patentansprüche 1 bis 4, **dadurch gekennzeichnet, dass** der mindestens eine Kern (2,12) mit einer Kernstruktur, insbesondere mit einer honigwabenförmigen Kernstruktur, und/oder mit einem Hartschaum gebildet ist.

6. Sandwichplatte (19) nach einem der Patentansprüche 1 bis 5, **dadurch gekennzeichnet, dass** die mindestens eine Verstärkungsstruktur (18) durch eine Kombination aus mindestens zwei Verstärkungsstrukturen (1,11) gebildet ist.

7. Sandwichplatte (19) nach einem der Patentansprüche 1 bis 6, **dadurch gekennzeichnet, dass** der Stopfen (8-10) zylindrisch ausgebildet ist.

8. Sandwichplatte (19) nach Patentanspruch 1 oder 7, **dadurch gekennzeichnet, dass** der mindestens eine Stopfen (8-10) mit einem faserverstärkten Kunststoffmaterial, insbesondere mit einer Vielzahl von planparallel übereinander geschichteten kreisförmigen mit einem Prepreg-Material gebildeten Lagen aufgebaut ist.

9. Verfahren zur Herstellung einer Sandwichplatte mit einer Kernstruktur, insbesondere mit einer honigwabenförmigen Kernstruktur (20), die beidseitig mit planparallelen Deckschichten (21,25) versehen ist, umfassend die Schritte:
Einbringen mindestens einer Aussparung (22) in die Kernstruktur (20),
Einbringen mindestens einer Ausnehmung in mindestens einen Kern (2,12),
Einsetzen eines Stopfens (8-10) in die Ausnehmung des Kerns (2,12),
Umwickeln des Kerns (2,12) mit Bändern (3-6,13-16), die mit einem faserverstärkten Prepreg-Material gebildet sind, zur Bildung mindestens einer Verstärkungsstruktur (1,11,18),
zumindest bereichsweise formschlüssiges Einbringen der Verstärkungsstruktur (1,11,18) in die mindestens eine Aussparung (22) unter Schaffung eines Stoffschlusses,
beidseitiges Aufbringen der Deckschichten (21,25) auf die Kernstruktur (20),
Aushärten der mindestens einen Verstärkungsstruktur (1,11,18) sowie der Deckschichten (21,25) unter Anwendung von Druck und/oder Temperatur,
Einbringen einer Bohrung (22) in den mindestens einen Stopfen (8) nach dem Abschluss des Aushärtungsprozesses, in welche ein Befestigungselement (27) zur Anbringung eines weiteren Bauteils an der Sandwichplatte einbringbar ist.

10. Verfahren nach Patentanspruch 9, **dadurch gekennzeichnet, dass** die mindestens eine Verstärkungsstruktur (1,11,18) zumindest bereichsweise mit der Aussparung (22) verklebt wird.

11. Verfahren nach einem der Patentansprüche 9 oder 10, **dadurch gekennzeichnet, dass** eine Deckschicht (21,25) bereits vor dem Einbringen der mindestens einen Verstärkungsstruktur (1,11,18) an die Kernstruktur (20) der Sandwichplatte (19) angebunden ist.

## Claims

1. Sandwich plate (19) having a core structure, in particular having a honeycomb-shaped core structure (20), and plane-parallel cover layers (21, 25) that are applied to both sides of this core structure, to form a floor surface in a fuselage of an aircraft, wherein the core structure comprises at least one recess (22) into which at least one reinforcing structure (1, 11, 18) is integrated,
**characterized in that**
the at least one reinforcing structure (1, 11, 18) is formed with at least one core (2, 12), wherein the core (2, 12) comprises at least one cut-out into which a stopper (8, 10) is introduced and it is possible to introduce at least one fastening element (27) into said stopper so as to connect at least one further component to the sandwich plate, and wherein a plurality of prepreg strips (3-6) is wrapped about the core (2, 12), the fibres of said prepreg strips being oriented in each case in a uniform direction.

2. Sandwich plate (19) according to Claim 1, **characterized in that** the uniform direction of orientation is ± 45°

3. Sandwich plate (19) according to any one of the Claims 1 or 2, **characterized in that** at least one reinforcing structure (1, 11, 18) is provided at least in regions with at least one surface-covering blank (7, 17), wherein the at least one blank (7, 17) is formed by means of a prepreg material whose reinforcing fibres comprise a direction of orientation of 0° and/or 90°.

4. Sandwich plate (19) according to any one of the Claims 1 to 3, **characterized in that** the at least one reinforcing structure (1, 11, 18) can be introduced at least in regions in a positive-locking manner into the recess (22) within the core structure (20) and forms a material bond with the recess (22).

5. Sandwich plate (19) according to any one of the Claims 1 to 4, **characterized in that** the at least one core (2, 12) is formed with a core structure, in particular with a honeycomb-shaped core structure, and/or with a rigid foam.

6. Sandwich plate (19) according to any one of the Claims 1 to 5, **characterized in that** the at least one reinforcing structure (18) is formed by virtue of a combination of at least two reinforcing structures (1, 11).

7. Sandwich plate (19) according to any one of the Claims 1 to 6, **characterized in that** the stopper (8-10) is embodied in a cylindrical manner.

8. Sandwich plate (19) according to Claim 1 or 7, **characterized in that** the at least one stopper (8-10) is constructed with a fibre-reinforced synthetic material, in particular having a plurality of circular layers that are formed by means of a prepreg material and a layered in a plane-parallel manner one above the other.

9. Method for producing a sandwich plate having a core structure, in particular having a honeycombshaped core structure (20) that is provided on both sides with plane-parallel cover layers (21, 25), said method comprising the steps:
introducing at least one recess (22) into the core structure (20),
introducing at least one cut-out into at least one core (2, 12),
inserting a stopper (8-10) into the cut-out of the core (2, 12),
wrapping the core (2, 12) with strips (3-6, 13-16) that are formed by means of a fibre reinforced prepreg material so as to form at least one reinforcing structure (1, 11, 18),
introducing the reinforcing structure (1, 11, 18) at least in regions in a positive-locking manner into the at least one recess (22) whilst creating a material bond,
applying the cover layers (21, 25) to both sides of the core structure (20),
curing the at least one reinforcing structure (1, 11, 18) and also the cover layers (21, 25) by applying pressure and/or temperature,
introducing a bore hole (22) into the at least one stopper (8) after completing the curing procedure and a fastening element (27) can be introduced into said stopper so as to attach a further component to the sandwich plate.

10. Method according to claim 9, **characterized in that** the at least one reinforcing structure (1, 11, 18) is adhered at least in regions to the recess (22).

11. Method according to any one of the Claims 9 or 10, **characterized in that** a cover layer (21, 25) is joined to the core structure (20) of the sandwich plate (19) prior to introducing the at least one reinforcing structure (1, 11, 18).

## Revendications

1. Panneau sandwich (19) comportant une structure de noyau, notamment une structure de noyau (20) en forme de nids d'abeille, et de couches de recouvrement (21, 25) planes parallèles appliquées sur celle-ci de chaque côté pour former une surface de sol dans une cellule de fuselage d'un avion, dans lequel la structure de noyau présente au moins un évidement (22) dans lequel est intégrée au moins une structure de renforcement (1, 11, 18),
**caractérisé en ce que**
l'au moins une structure de renforcement (1, 11, 18) est formée avec au moins un noyau (2, 12), dans lequel le noyau (2, 12) présente au moins un creux dans lequel est placé un bouchon (8 à 10) dans lequel au moins un élément de fixation (27) peut être placé pour relier au moins un composant supplémentaire au panneau sandwich, et dans lequel le noyau (2, 12) est enveloppé avec une pluralité de bandes préimprégnées, lesquelles présentent une direction de l'allure des fibres respectivement homogène.

2. Panneau sandwich (19) selon la revendication 1, **caractérisé en ce que** la direction homogène de l'allure est de ± 45°.

3. Panneau sandwich (19) selon l'une quelconque des revendications 1 ou 2, **caractérisé en ce qu'**au moins une structure de renforcement (1, 11, 18) est munie au moins par section d'au moins une coupe plane (7, 17), dans lequel l'au moins une coupe (7, 17) est formée par au moins une matière préimprégnée dont les fibres de renforcement présentent une direction d'allure de 0° et/ou 90°.

4. Panneau sandwich (19) selon l'une quelconque des revendications 1 à 3, **caractérisé en ce que** l'au moins une structure de renforcement (1, 11, 18) est insérable au moins en partie par adhérence de forme dans l'évidement (22) à l'intérieur de la structure de noyau (20) et **en ce qu'**elle forme une adhérence de matière avec l'évidement (22).

5. Panneau sandwich (19) selon l'une quelconque des revendications 1 à 4, **caractérisé en ce que** l'au moins un noyau (2, 12) est formé avec une structure de noyau, notamment une structure de noyau en forme de nids d'abeille, et/ou avec une mousse rigide.

6. Panneau sandwich (19) selon l'une quelconque des revendications 1 à 5, **caractérisé en ce que** l'au moins une structure de renforcement (18) est formée par une combinaison d'au moins deux structures de renforcement (1, 11).

7. Panneau sandwich (19) selon l'une quelconque des revendications 1 à 6, **caractérisé en ce que** le bouchon (8 à 10) est réalisé de manière cylindrique.

8. Panneau sandwich (19) selon la revendication 1 ou 7, **caractérisé en ce que** l'au moins un bouchon (8 à 10) est conçu avec une matière plastique renforcée par fibres, notamment avec une pluralité de couches circulaires empilées les unes sur les autres de manière plane, formées avec une matière préimprégnée.

9. Procédé de fabrication d'un panneau sandwich doté d'une structure de noyau, notamment d'une structure de noyau (20) en forme de nids d'abeille, qui est munie de chaque côté de couches de recouvrement (21, 25) planes parallèles, comprenant les étapes :
mise en oeuvre d'au moins un évidement (22) dans la structure de noyau (20),
mise en oeuvre d'au moins un creux dans au moins un noyau (2, 12),
insertion d'un bouchon (8 à 10) dans le creux du noyau (2, 12),
enveloppement du noyau (2, 12) à l'aide de bandes (3 à 6, 13 à 16) qui sont formées avec une matière préimprégnée renforcée par fibres, pour former au moins une structure de renforcement (1, 11, 18),
mise en place au moins en partie par adhérence de forme de la structure de renforcement (1, 11, 18) dans l'au moins un évidement (22) en créant une adhérence de matière,
mise en place des couches de recouvrement (21, 25) de chaque côté sur la structure de noyau (20),
durcissement de l'au moins une structure de renforcement (1, 11, 18) ainsi que des couches de recouvrement (21,25) avec application de pression et/ou de température,
mise en oeuvre d'un alésage (22) dans l'au moins un bouchon (8) après l'achèvement du processus de durcissement, dans lequel alésage un élément de fixation (27) peut être placé pour la pose d'un composant supplémentaire sur le panneau sandwich.

10. Procédé selon la revendication 9, **caractérisé en ce que** l'au moins une structure de renforcement (1, 11, 18) est collée au moins par section avec l'évidement (22).

11. Procédé selon l'une quelconque des revendications 9 ou 10, **caractérisé en ce qu'**une couche de recouvrement (21, 25) est reliée à la structure de noyau (20) du panneau sandwich déjà avant la mise en oeuvre de l'au moins une structure de renforcement (1, 11, 18).
